# EUROPÄISCHE PATENTSCHRIFT

(11) **EP 3 790 776 B1**
(45) Veröffentlichungstag und Bekanntmachung des Hinweises auf die Patenterteilung: **26.10.2022**
(21) Anmeldenummer: 19711520.7
(22) Anmeldetag: 07.03.2019
(51) Int. Cl.: B60T 8/40, B60T 8/48

(54) **VERFAHREN ZUM STEUERN EINER FAHRDYNAMIKREGELUNGSVORRICHTUNG UND FAHRDYNAMIKREGELUNGSVORRICHTUNG**
METHOD FOR CONTROLLING A DRIVE DYNAMIC CONTROL DEVICE, AND DRIVE DYNAMIC CONTROL DEVICE
PROCÉDÉ SERVANT À COMMANDER UN DISPOSITIF DE RÉGULATION DE DYNAMIQUE DE CONDUITE ET DISPOSITIF DE DYNAMIQUE DE CONDUITE

(30) Priorität: 09.05.2018 DE 102018207207
(43) Veröffentlichungstag der Anmeldung: 17.03.2021
(73) Patentinhaber: Robert Bosch GmbH, 70442 Stuttgart (DE)
(72) Erfinder: EMDE, Christoph, 74211 Leingarten (DE); BODMANN, Jochen, 71720 Oberstenfeld (DE); SCHMIDTLEIN, Andreas, 71732 Tamm (DE)
(86) Internationale Anmeldenummer: PCT/EP2019/055709
(87) Internationale Veröffentlichungsnummer: WO 2019/214865

(56) Entgegenhaltungen:
- EP-A2- 2 019 474
- WO-A1-2009/127472
- WO-A2-2012/039845
- WO-A2-2015/161958
- DE-A1-102007 029 228
- DE-A1-102007 031 750

## Beschreibung

### Gebiet der Erfindung

Die Erfindung betrifft ein Verfahren zum Steuern einer Fahrdynamikregelungsvorrichtung und eine Fahrdynamikregelungsvorrichtung.

### Stand der Technik

Bei Fahrdynamikregelungsvorrichtungen bzw. bei ESP-Systemen (Systemen für die elektronische Stabilitätskontrolle) in Kraftfahrzeugen erfolgt die aktive Verschiebung bzw. das Fördern von Bremsflüssigkeit zum Zwecke eines aktiven Druckaufbaus in der Bremsflüssigkeit oder einer Entleerung einer Niederdruckspeicherkammer für die Bremsflüssigkeit mit Hilfe einer elektrisch betriebenen Rückförderpumpe.

Bei der Auslegung einer Drehzahl-Drehmoment-Kennlinie für diesen Elektromotor, der einen Rotor und einen Stator aufweist, ist insbesondere der ABS(Anti-Blockier-System)-Hochdruckauslegungspunkt zu beachten, bei dem die elektrisch angetriebene Rückförderpumpe gegen sehr hohe Drücke bzw. maximal mögliche Drücke der Bremsflüssigkeit anlaufen können muss. Auch an diesem Punkt muss der Elektromotor zum Antreiben der Pumpe bzw. Rückförderpumpe anlaufen.

Die Anforderung für den Hochdruckauslegungspunkt ergibt sich aus dem maximalen Systemdruck, bei dem eine ABS-Regelung möglich sein soll, der Exzentrizität des Exzenterlagers, sowie der Fläche eines Pumpenelements. Hierbei ist zu beachten, dass das erforderliche Anlaufmoment, d.h. das notwendige Mindestdrehmoment zum Anlaufen des Motors, von der Position des Pumpenelements bzw. der Pumpenelemente und somit von der Position des Rotors relativ zum Stator abhängt.

Um bei bisher bekannten Fahrdynamikregelungsvorrichtungen sicherzustellen, dass der Elektromotor, der die Pumpenelemente antreibt, bei jeder Stellung bzw. Position des Rotors relativ zum Stator und somit bei jeder Stellung bzw. Position der Pumpenelemente anläuft, muss der Auslegungspunkt bzw. muss der Elektromotor derart konzipiert sein, dass auch bei einer maximalen Summe der Drehmomente an den Pumpenelementen der Elektromotor anläuft. Somit muss der Elektromotor mit einer hierfür notwendigen Drehzahl-Drehmoment-Kennlinie ausgelegt sein. Folglich ist der Elektromotor recht groß bzw. sehr leistungsstark und folglich teuer.

Die DE 10 2007 031750 A1, die WO 2009/127472 A1 und die EP 2 019 474 A2 zeigen Vorrichtungen bzw. Verfahren gemäß dem Stand der Technik.

### Offenbarung der Erfindung

### Vorteile der Erfindung

Ausführungsformen der vorliegenden Erfindung können in vorteilhafter Weise ermöglichen, ein Verfahren zum Steuern einer Fahrdynamikregelungsvorrichtung bzw. eine Fahrdynamikregelungsvorrichtung aufzuzeigen, mittels dem bzw. bei der auch bei einem Elektromotor mit einer geringen Leistung ein Anlaufen des Elektromotors jederzeit sichergestellt ist.

Gemäß einem ersten Aspekt der Erfindung wird ein Verfahren zum Steuern einer Fahrdynamikregelungsvorrichtung, die zum Beeinflussen des Bremsens von Rädern eines Kraftfahrzeugs ausgebildet ist, vorgeschlagen, wobei die Fahrdynamikregelungsvorrichtung eine Pumpe mit mindestens zwei Pumpenelementen zum Fördern einer Bremsflüssigkeit und einen Elektromotor umfassend einen Rotor und einen Stator zum Antreiben der Pumpenelemente aufweist, und dadurch gekennzeichnet, dass das Verfahren folgende Schritte umfasst: Erfassen der Position des Rotors relativ zu dem Stator; und Einstellen einer Idealposition des Rotors relativ zu dem Stator, wobei die Summe der Drehmomente zum Bewegen der Pumpenelemente in der Idealposition unterhalb eines vorgegebenen Drehmomentgrenzwerts liegt, insbesondere minimal ist, wobei die Idealposition bestimmt wird, indem ein vorgegebener Gegendruck gegen das Fördern der Bremsflüssigkeit mittels der Pumpe erzeugt wird und der benötigte Strom des Elektromotors zum Fördern der Bremsflüssigkeit gegen den erzeugten Gegendruck mittels der Pumpenelemente erfasst wird, wobei diejenige Position des Rotors relativ zum Stator als Idealposition bestimmt wird, in der der benötigte Strom für den Elektromotor unterhalb eines vorgegebenen Stromwerts liegt, insbesondere minimal ist.

Ein Vorteil dieses Verfahrens ist, dass der Elektromotor im Allgemeinen nur eine geringe Leistung aufweisen muss. Da der Rotor und somit die Pumpenelemente sich, wenn der sich der Rotor in der Idealposition ist, leicht bewegen lassen und somit ein geringes Drehmoment zum Bewegen der Pumpenelemente notwendig ist, kann der Elektromotor üblicherweise zu jedem Zeitpunkt leicht anlaufen. Folglich kann der Hochdruckauslegungspunkt, d.h. ein Punkt in der Drehzahl-Drehmoment-Kennlinie, bei dem die elektrisch angetriebene Pumpe gegen sehr hohe Drücke bzw. Systemdrücke der Bremsflüssigkeit (z.B. bei der ABS-Funktionalität) anlaufen muss, im Allgemeinen gering sein. Daher kann der Elektromotor und folglich die Fahrdynamikregelungsvorrichtung typischerweise technisch einfach und kostengünstig sowie raumsparend ausgebildet werden. Ein weiterer Vorteil ist, dass der Elektromotor in der Regel sehr schnell anläuft und somit sehr schnell Bremsflüssigkeit von der Pumpe gefördert werden kann. Hierdurch kann die Idealposition in der Regel schnell und technisch einfach bestimmt werden. Dies kann z.B. während der Endmontage der Fahrdynamikregelungsvorrichtung durchgeführt werden. Denkbar ist auch, dass während der Endmontage des Kraftfahrzeugs dies durchgeführt wird. Es kann mehrere Idealpositionen geben, d.h. in mehreren Positionen des Rotors relativ zum Stator liegt die Summe der Drehmomente unterhalb des Drehmomentgrenzwerts. Es ist auch möglich, dass an mehreren Positionen des Rotors relativ zum Stator die Summe der Drehmomente gleich niedrig ist, d.h. dass es mehrere lokale Minima mit der im Wesentlichen gleichen Summe der Drehmomente gibt.

Gemäß einem zweiten Aspekt der Erfindung wird eine Fahrdynamikregelungsvorrichtung zum Beeinflussen des Bremsens von Rädern eines Kraftfahrzeugs vorgeschlagen, wobei die Fahrdynamikregelungsvorrichtung folgendes umfasst: eine Pumpe mit mindestens zwei Pumpenelementen zum Fördern einer Bremsflüssigkeit, und einen Elektromotor umfassend einen Rotor und einen Stator zum Antreiben der Pumpenelemente, eine Positionserfassungsvorrichtung zum Erfassen der Position des Rotors relativ zum Stator, und eine Steuerungseinrichtung zum Einstellen der Position des Rotors relativ zum Stator in einer Idealposition, wobei in der Idealposition die Summe der Drehmomente zum Bewegen der Pumpenelemente unterhalb eines vorgegebenen Drehmomentgrenzwerts liegt, insbesondere minimal ist, dadurch gekennzeichnet, dass die Fahrdynamikregelungsvorrichtung derart ausgebildet ist, dass die Idealposition bestimmt wird, indem ein vorgegebener Gegendruck gegen das Fördern der Bremsflüssigkeit mittels der Pumpe erzeugt wird und der benötigte Strom des Elektromotors zum Fördern der Bremsflüssigkeit gegen den erzeugten Gegendruck mittels der Pumpenelemente erfasst wird, wobei diejenige Position des Rotors relativ zum Stator als Idealposition bestimmt wird, in der der benötigte Strom für den Elektromotor unterhalb eines vorgegebenen Stromwerts liegt, insbesondere minimal ist.

Ein Vorteil dieser Fahrdynamikregelungsvorrichtung ist, dass der Elektromotor typischerweise nur eine geringe Leistung aufweisen muss. Da der Rotor und somit die Pumpenelemente sich, wenn der sich der Rotor in der Idealposition ist, leicht bewegen lassen und somit ein geringes Drehmoment zum Bewegen der Pumpenelemente notwendig ist, kann der Elektromotor der Fahrdynamikregelungsvorrichtung in der Regel zu jedem Zeitpunkt leicht anlaufen. Folglich kann der Hochdruckauslegungspunkt der Fahrdynamikregelungsvorrichtung, d.h. ein Punkt in der Drehzahl-Drehmoment-Kennlinie, bei dem die elektrisch angetriebene Pumpe gegen sehr hohe Drücke bzw. Systemdrücke der Bremsflüssigkeit (z.B. bei der ABS-Funktionalität) anlaufen muss, im Allgemeinen gering sein. Daher kann der Elektromotor und folglich die Fahrdynamikregelungsvorrichtung im Allgemeinen technisch einfach und kostengünstig sowie raumsparend ausgebildet sein. Ein weiterer Vorteil ist, dass der Elektromotor in der Regel sehr schnell anläuft und somit sehr schnell Bremsflüssigkeit von der Pumpe gefördert werden kann. Da die Rotorposition relativ zum Stator erfasst wird, kann der Rotor typischerweise technisch einfach in einer Idealposition angehalten oder in diese bewegt werden.

Ideen zu Ausführungsformen der vorliegenden Erfindung können unter anderem als auf den nachfolgend beschriebenen Gedanken und Erkenntnissen beruhend angesehen werden.

Gemäß einer Ausführungsform des Verfahrens wird nach jeder Bewegung des Elektromotors der Rotor derart eingestellt wird, dass sich dieser in Idealposition befindet. Hierdurch ist typischerweise sichergestellt, dass der Elektromotor jederzeit anlaufen und die Pumpe Bremsflüssigkeit fördern kann.

Gemäß einer Ausführungsform des Verfahrens wird der Rotor dann in die Idealposition bewegt, wenn sich der Elektromotor trotz eines Startsignals zum Starten der Bewegung des Elektromotors nicht bewegt. Vorteilhaft hieran ist typischerweise, dass der Rotor nicht nach jedem Stopp des Elektromotors in die Idealposition bewegt wird, wodurch es zu erhöhtem Verschleiß etc. kommen kann, sondern nur dann in die Idealposition bewegt wird, wenn dies notwendig ist, d.h. wenn der Elektromotor trotz Startsignals nicht anläuft. Zudem ist der Energieverbrauch hierdurch in der Regel geringer.

Gemäß einer Ausführungsform des Verfahrens wird der Elektromotor entgegengesetzt zur Normallaufrichtung des Elektromotors bewegt, um den Rotor in die Idealposition zu bewegen. Hierdurch kann der Rotor im Allgemeinen technisch einfach, mit geringem Energieaufwand und schnell in die Idealposition bewegt werden.

Gemäß einer Ausführungsform des Verfahrens beträgt in der Idealposition die Summe der Drehmomente zum Bewegen der Pumpenelemente im Wesentlichen Null. Vorteilhaft hieran ist, dass der Elektromotor in der Regel besonders schnell anläuft und die Pumpe besonders schnell Bremsflüssigkeit fördert.

Gemäß einer Ausführungsform des Verfahrens fördern die Pumpenelemente abwechselnd Bremsflüssigkeit. Hierdurch kann die Bremsflüssigkeit in der Regel technisch einfach und zuverlässig gefördert werden und gleichzeitig die Drehmomente zum Bewegen der Pumpenelemente gering gehalten werden.

Gemäß einer Ausführungsform des Verfahrens wird der Rotor dann in die Idealposition eingestellt, wenn erkannt wird, dass, insbesondere aufgrund des Drückens des Bremspedals, ein Gegendruck gegen das Fördern der Bremsflüssigkeit vorhanden ist, der über einem vorgegebenen Druckwert liegt. Vorteilhaft hieran ist, dass üblicherweise ein unnötiges Positionieren des Rotors relativ zum Stator vermieden wird. Erst wenn damit zu rechnen ist, dass die Pumpe gegen einen hohen Druck Bremsflüssigkeit fördern muss bzw. anlaufen muss und somit die Summe der Drehmomente, die zum Bewegen der Pumpenelemente notwendig ist, voraussichtlich hoch sein wird, was dazu führen kann, dass der Elektromotor unter Umständen nur schwer oder langsam anläuft, wird der Rotor in der Idealposition eingestellt, d.h. in der Idealposition gestoppt oder nach dem Auslaufen in die Idealposition bewegt.

Gemäß einer Ausführungsform des Verfahrens muss der Gegendruck innerhalb eines vorgegebenen Zeitraums mehrmals, insbesondere mindestens dreimal, und/oder für einen Zeitraum, der länger als ein vorgegebener Zeitraum ist, oberhalb des vorgegebenen Druckwert liegen, damit der Rotor in der Idealposition eingestellt wird. Ein Vorteil hiervon ist, dass der Rotor üblicherweise noch seltener unnötig in der Idealposition eingestellt oder bewegt wird. Erst bei einer hohen Wahrscheinlichkeit, dass die Pumpe gegen einen hohen Druck Bremsflüssigkeit fördern muss und somit der Elektromotor unter Umständen nur schwer oder langsam anläuft, wird der Rotor in der Idealposition eingestellt bzw. in die Idealposition bewegt.

Gemäß einer Ausführungsform des Verfahrens wird der Rotor dann in der Idealposition eingestellt, wenn der Füllstand eines Reservoirs, aus dem die Pumpe die Bremsflüssigkeit fördert, einen vorgegebenen Füllstandgrenzwert, insbesondere 80% des Maximalfüllstands, vorzugsweise 90% des Maximalfüllstands, überschreitet. Für die ABS-Funktionalität wird üblicherweise ein Teil der Bremsflüssigkeit in ein Reservoir befördert, um einen Druckabbau zu erreichen. Der Rotor wird daher in der Regel erst dann in die Idealposition bewegt, wenn davon ausgegangen wird, dass das Reservoir bald bzw. bei einem der nächsten Male der Verwendung der ABS-Funktionalität sich dem Maximalfüllstand annähert oder diesen erreichen würde. Somit wird typischerweise ein unnötiges Einstellen oder Bewegen des Rotors in der bzw. in die Idealposition noch seltener durchgeführt.

Einstellen des Rotors in der Idealposition kann insbesondere bedeuten, dass der Rotor, wenn er zum Fördern von Bremsflüssigkeit bewegt wurde, am Ende seiner Bewegung in der Idealposition angehalten wird (z.B. beim Auslaufen der Bewegung nach dem Fördern) und/oder dass der Rotor, wenn er seine Bewegung in einer Position beendet hat, in der er sich nicht in der Idealposition relativ zum Stator befindet, aktiv durch den Elektromotor in die Idealposition bewegt wird.

Die Position der Pumpenelemente hängt üblicherweise direkt mit der Position des Rotors relativ zum Stator zusammen. Dies bedeutet, dass sich die Pumpenelemente stets wieder in derselben Position befinden, wenn sich der Rotor relativ zum Stator an bzw. in derselben Position befindet.

Dass ein Wert "minimal" ist kann insbesondere bedeuten, dass der Wert ein lokales Minimum oder ein globales Minimum aufweist.

Der Drehmomentgrenzwert kann z.B. 0,03 Nm oder 0,01 Nm betragen. Der Drehmomentgrenzwert kann von der verwendeten Fördereinheit, insbesondere der Pumpenfläche bzw. dem Exzenter abhängen.

Es wird darauf hingewiesen, dass einige der möglichen Merkmale und Vorteile der Erfindung hierin mit Bezug auf unterschiedliche Ausführungsformen beschrieben sind. Ein Fachmann erkennt, dass die Merkmale des Verfahrens zum Steuern einer Fahrdynamikregelungsvorrichtung bzw. der Fahrdynamikregelungsvorrichtung in geeigneter Weise kombiniert, angepasst oder ausgetauscht werden können, um zu weiteren Ausführungsformen der Erfindung zu gelangen.

### Kurze Beschreibung der Zeichnungen

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.
- Fig. 1 zeigt: eine schematische Ansicht einer Ausführungsform der erfindungsgemäßen Fahrdynamikregelungsvorrichtung;
- Fig. 2 zeigt: ein Diagramm des Förderflusses des ersten Pumpenelements und des zweiten Pumpenelements der Fahrdynamikregelungsvorrichtung aus Fig. 1 abhängig von der Zeit;
- Fig. 3 zeigt: ein Diagramm eines Winkels des Rotors zu dem Stator des Elektromotors der Fahrdynamikregelungsvorrichtung aus Fig. 1 abhängig von der Zeit;
- Fig. 4 zeigt: ein Diagramm der Drehmomente des ersten Pumpenelementes und des zweiten Pumpenelements der Fahrdynamikregelungsvorrichtung aus Fig. 1 abhängig von der Zeit; und
- Fig. 5 zeigt: ein Diagramm der Exzenterwege des ersten Pumpenelements und des zweiten Pumpenelements der Fahrdynamikregelungsvorrichtung aus Fig. 1 abhängig von der Zeit.

Die Figuren sind lediglich schematisch und nicht maßstabsgetreu. Gleiche Bezugszeichen bezeichnen in den Figuren gleiche oder gleichwirkende Merkmale.

### Ausführungsformen der Erfindung

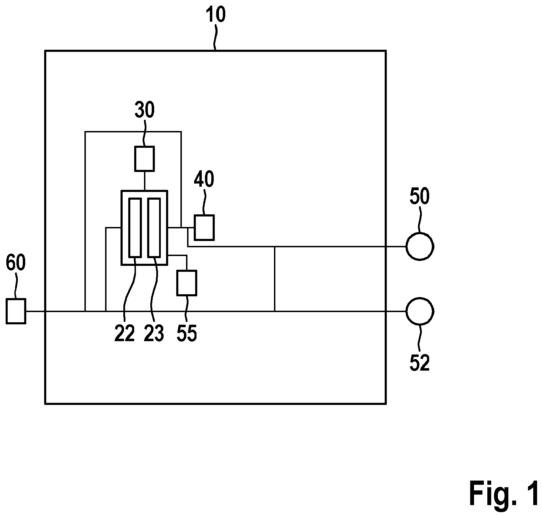

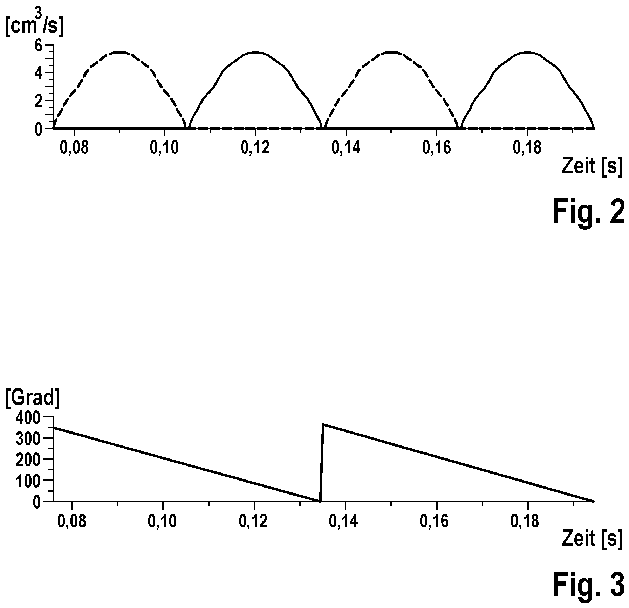

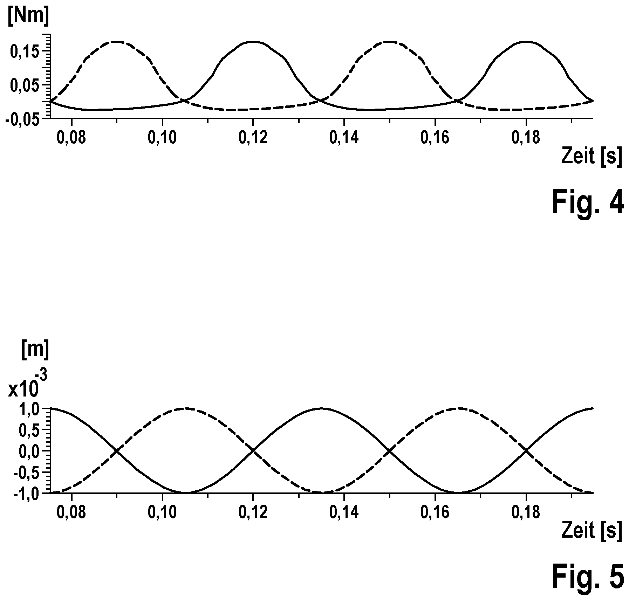

Fig. 1 zeigt eine schematische Ansicht einer Ausführungsform der erfindungsgemäßen Fahrdynamikregelungsvorrichtung 10. Fig. 2 zeigt ein Diagramm des Förderflusses des ersten Pumpenelements 22 und des zweiten Pumpenelements 23 der Fahrdynamikregelungsvorrichtung 10 aus Fig. 1 abhängig von der Zeit. Fig. 3 zeigt ein Diagramm eines Winkels des Rotors zu dem Stator des Elektromotors 30 der Fahrdynamikregelungsvorrichtung 10 aus Fig. 1 abhängig von der Zeit. Fig. 4 zeigt ein Diagramm der Drehmomente des ersten Pumpenelementes 23 und des zweiten Pumpenelements 23 der Fahrdynamikregelungsvorrichtung 10 aus Fig. 1 abhängig von der Zeit. Fig. 5 zeigt ein Diagramm es Exzenterwegs des ersten Pumpenelements 22 und des zweiten Pumpenelements 23 der Fahrdynamikregelungsvorrichtung 10 aus Fig. 1 abhängig von der Zeit.

In Fig. 1 ist eine Vielzahl von Ventilen aus Gründen der Übersichtlichkeit weggelassen worden.

In Fig. 2 gibt die y-Achse die Menge an geförderter Bremsflüssigkeit in cm³/s an. In Fig. 3 gibt die y-Achse den Winkel des Rotors des Elektromotors 30 zu dem Stator des Elektromotors 30 in Grad an. In Fig. 4 gibt die y-Achse das Drehmoment in Nm an, das zum Bewegen des jeweiligen Pumpenelements 22, 23 notwendig ist. In Fig. 5 gibt die y-Achse die Förderposition der Pumpenelemente 22, 23 in Millimetern an.

Die Fahrdynamikregelungsvorrichtung 10 umfasst einen Elektromotor 30, der eine Pumpe 20 antreibt. Die Pumpe 20 umfasst mindestens zwei Pumpenelemente 22, 23. Die Pumpenelemente 22, 23 können beispielsweise Kolben einer Kolbenpumpe sein.

Ein Bremspedal 60 ist mit der Fahrdynamikregelungsvorrichtung 10 fluidverbunden. Das Bremspedal 60 dient zum Bremsen der zwei, drei oder vier Räder 50, 52 des Kraftfahrzeugs.

Die Fahrdynamikregelungsvorrichtung 10 beeinflusst das Bremsen der zwei, drei oder vier Räder 50, 52 des Kraftfahrzeugs, mit denen die Fahrdynamikregelungsvorrichtung 10 verbunden ist. Die Fahrdynamikregelungsvorrichtung 10 kann im Rahmen der Funktionalität eines Anti-Blockier-Systems (ABS) ein oder mehrere Räder 50, 52 kurzzeitig freigeben. Auch kann die Fahrdynamikregelungsvorrichtung 10 im Rahmen der elektronischen Stabilitätskontrolle (ESP) ein oder mehrere Räder 50, 52 aktiv blockieren bzw. bremsen.

Die Pumpe 20 fördert eine Bremsflüssigkeit. Die Pumpe 20 kann beispielsweise Bremsflüssigkeit aus dem Reservoir 40 in Richtung des Bremspedals 60 fördern.

Die Pumpenelemente 22, 23 fördern die Bremsflüssigkeit abwechselnd, wie dies in Fig. 2 zu sehen ist. D.h. das eine Pumpenelement 22 fördert bzw. pumpt Bremsflüssigkeit, während das andere Pumpenelement 23 in dieser Zeit keine Bremsflüssigkeit fördert.

Wie in Fig. 4 gut zu erkennen ist, ist die Summe der Drehmomente, die zum Bewegen der Pumpenelemente 22, 23 notwendig ist, nicht über die Zeit konstant, sondern ist an manchen Zeitpunkten sehr groß (beispielsweise am Zeitpunkt t = 0,090 s) und an manchen Zeitpunkten sehr klein bzw. minimal (beispielsweise am Zeitpunkt t = 0,105 s).

Der Zeitpunkt bzw. die Position des Rotors zum Stator, an dem die Summe der Drehmomente der Pumpenelemente 22, 23 unter einem vorgegebenen Drehmomentgrenzwert (z.B. 0,01 Nm oder ca. 0,005 Nm) liegt oder minimal ist, ist als Idealposition definiert. Es kann mehrere Idealpositionen geben. Die Idealpositionen, d.h. Positionen, an denen die Summe der Drehmomente gering ist, sind in Fig. 4 gut erkennbar; die Idealpositionen sind die Positionen in Fig. 4, an denen die Summe der Drehmomente der beiden Pumpenelemente 22, 23 minimal ist. An diesen Stellen weist ein Pumpenelement 22 ein negatives Drehmoment auf. Beispielsweise können bei einer Kolbenpumpe die Kolben verschiedene Abstände zu einer Unterseite der Pumpe 20 einnehmen.

Die Pumpe 20 muss insbesondere die Bremsflüssigkeit gegen einen bestehenden Gegendruck fördern, z.B. wenn das Bremspedal 60 durch den Fahrer betätigt wird. Der Fahrer kann beispielsweise durch Drücken des Bremspedals 60 einen Druck von ca. 200 bar oder von ca. 280 bar erzeugen. Gegen diesen Druck muss die Pumpe 20 Bremsflüssigkeit fördern können.

Die Fahrdynamikregelungsvorrichtung 10 umfasst eine Positionserfassungsvorrichtung 55. Die Positionserfassungsvorrichtung 55 erfasst die Position des Rotors relativ zum Stator, d.h. welchen Winkel der Rotor zu dem Stator aufweist. Dies ist Fig. 3 gezeigt. Denkbar ist auch, dass nur die Position eines Pumpenelements 22, 23 erfasst wird, da hieraus aufgrund der Verbindung des Elektromotors 30 zu den Pumpenelementen 22, 23 die Position des Rotors relativ zum Stator eindeutig bestimmbar ist. Für jeden in Fig. 3 gezeigten Winkel liegen die Positionen der Pumpenelemente 22, 23, die in Fig. 5 gezeigt sind, eindeutig fest.

Der Elektromotor 30 steht für einen Teil der Zeit still, d.h. in dieser Zeit wird die Pumpe 20 nicht betrieben und die Pumpenelemente 22, 23 stehen still bzw. befinden sich im Ruhezustand. Wenn die Pumpe 20 nun anfangen soll, Bremsflüssigkeit zu fördern, muss der Elektromotor 30 ein Drehmoment erzeugen, das auf die Pumpenelemente 22, 23 wirkt, um diese aus dem Stillstand bzw. Ruhezustand in Bewegung zu bringen. Das Drehmoment, das zum Anlaufen bzw. Betreiben der Pumpe 20 benötigt wird, ist die Summe der in Fig. 4 gezeigten Drehmomente der beiden Pumpenelemente 22, 23. Wird der Elektromotor 30 gestartet, wenn der Rotor bzw. die Pumpenelemente 22, 23 sich an einer Position befinden wie zum Zeitpunkt t = 0,090 s, wird ein sehr hohes Drehmoment benötigt, was dazu führen kann, dass der Elektromotor 30 nicht anläuft und die Pumpe 20 nicht pumpt.

Bei Beendigung des Betriebs des Elektromotors 30 kann der Rotor in die Idealposition bzw. eine der Idealpositionen bewegt werden, so dass nur ein sehr geringes Drehmoment zum Starten des Elektromotors 30 bzw. der Pumpe 20 bzw. zum Fördern der Bremsflüssigkeit benötigt wird, wie dies z.B. zum Zeitpunkt 0,105 s in Fig. 4 notwendig ist. Wenn der Rotor sich somit in einem Winkel von ca. 180° (siehe Fig. 3) befindet, wird nur ein geringes Drehmoment zum Starten des Förderns der Bremsflüssigkeit mittels der Pumpe 20 benötigt. Die Minima befinden sich in Fig. 4 an den Zeitpunkten, in denen sich die Linien der beiden Drehmomente der Pumpenelemente 22, 23 schneiden.

Der Rotor kann beispielsweise in die Idealposition bewegt werden, indem der Elektromotor 30 entgegengesetzt zur Normallaufrichtung bewegt wird. Die Normallaufrichtung ist die Richtung, in der die Pumpe 20 Bremsflüssigkeit in Richtung des Bremspedals 60 fördert.

Auch vorstellbar ist, dass die Bewegung des Rotors zu einem Zeitpunkt gestoppt wird, zu dem der Rotor in seiner Idealposition ist. Dies bedeutet, dass beim Auslaufen des Rotors nach dem Betrieb des Elektromotors 30 bzw. der Pumpe 20 der Rotor an einer der Idealpositionen gestoppt wird.

Die Idealposition kann auch mehrere Idealpositionen umfassen, d.h. es kann mehrere Positionen des Rotors relativ zum Stator geben, an denen die Summe der Drehmomente unterhalb des Drehmomentgrenzwerts liegt oder an denen ein Minimum der Summe der Drehmomente vorhanden ist, wie dies in Fig. 4 zu sehen ist.

Es ist auch möglich, den Rotor erst dann in die Idealposition zu bewegen, wenn der Elektromotor 30 trotz eines entsprechenden Startsignals nicht anläuft. Dies ist beispielsweise möglich, da Bremsflüssigkeit in dem Reservoir 40 zwischengespeichert werden kann. Der Rotor kann hierbei beispielsweise entgegengesetzt zur Normallaufrichtung in den entsprechenden Winkel relativ zum Stator bewegt werden.

Darüber hinaus ist es denkbar, den Rotor erst dann in die Idealposition zu bewegen, wenn mittels des Bremspedals 60 ein (Gegen-)Druck oberhalb eines Mindestdruckwerts erzeugt wurde bzw. vorhanden ist. Beispielsweise wird der Rotor erst dann in die Idealposition bewegt, wenn der Fahrer das Bremspedal 60 derart drückt, dass ein Druck von mehr als 150 bar oder mehr als 200 bar in der Bremsflüssigkeit am bzw. in der Nähe des Bremspedals 60 erzeugt wird. Da hier ein größeres Drehmoment zum Bewegen des Rotors aus der Ruheposition bzw. der Pumpenelemente 22, 23 aus der Ruheposition bzw. aus dem Stillstand notwendig werden kann, wird der Rotor in die Idealposition bzw. in eine der Idealpositionen bewegt. Bei der Bewegung des Rotors bewegen sich die Pumpenelemente 22, 23 entsprechend mit, da eine starre bzw. feste Beziehung zwischen der Position des Rotors relativ zu dem Stator und der Position der Pumpenelemente 22, 23 besteht, wie dies aus Fig. 3 in Verbindung mit Fig. 6 hervorgeht.

Als weitere Bedingung neben dem Überschreiten des Mindestdruckwerts kann beispielsweise verlangt werden, dass der vorhandene Gegendruck für einen bestimmten Zeitraum den Mindestdruckwert überschreitet oder dass der vorhandene Gegendruck innerhalb eines bestimmten Zeitraums mehrfach, z.B. mindestens zweimal oder dreimal, überschreitet. Erst wenn diese zusätzliche Bedingung erfüllt ist, wird der Rotor in die Idealposition bewegt oder in der Idealposition gestoppt.

Die Idealposition bzw. die Idealpositionen des Rotors können bestimmt werden, indem der Strom, den der Elektromotor 30 zum Betreiben der Pumpe 20 oder zum Anlaufen der Pumpe 20 benötigt, erfasst bzw. gemessen wird. Da ein hohes Drehmoment mit einer hohen Stromaufnahme des Elektromotors 30 korrespondiert, bedeutet eine hohe Stromaufnahme, dass ein hohes Drehmoment bzw. eine große Summe der Drehmomente zum Bewegen der Pumpenelemente 22, 23 notwendig ist. Gleiches gilt umgekehrt für ein niedriges Drehmoment. Folglich weist die Summe der Drehmomente für die Pumpenelemente 22, 23, wobei die Komponenten der Summe in Fig. 4 gezeigt sind, dann ein Minimum auf, wenn die Stromaufnahme des Elektromotors 30 ein Minimum aufweist. Somit weist die Summe der Drehmomente für die Pumpenelemente 22, 23, wobei die Komponenten der Summe in Fig. 4 gezeigt sind, dann ein Maximum auf, wenn die Stromaufnahme des Elektromotors 30 ein Maximum aufweist. Dieses Bestimmen der Idealpositionen kann z.B. während der Endmontage der Fahrdynamikregelungsvorrichtung 10 und/oder des Kraftfahrzeugs durchgeführt werden. Auch eine Berechnung der Idealpositionen ist möglich.

Die Idealposition bzw. Idealpositionen, d.h. die jeweiligen Stellung des Rotors relativ zum Stator, an der nur ein geringes Drehmoment zum Betreiben der Pumpe 20 notwendig ist, können in einem nicht-flüchtigen Speicher in der Fahrdynamikregelungsvorrichtung 10 bzw. im Kraftfahrzeug oder auch außerhalb des Kraftfahrzeugs (z.B. einer Cloud) gespeichert werden.

Die Pumpe 20 kann insbesondere eine sogenannte Rückförderpumpe sein.

Insbesondere wird eine feldorientierte Regelung des Elektromotors 30 durchgeführt.

Die Positionserfassungsvorrichtung kann eine optische, elektronische oder mechanische Erfassungsvorrichtung zum Erfassen des Winkels des Rotors relativ zum Stator sein.

Der Elektromotor kann ein bürstenloser Gleichstrommotor sein oder einen solchen umfassen.

Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Bezugszeichen in den Ansprüchen sind nicht als Einschränkung anzusehen.

## Patentansprüche

1. Verfahren zum Steuern einer Fahrdynamikregelungsvorrichtung (10), die zum Beeinflussen des Bremsens von Rädern (50, 52) eines Kraftfahrzeugs ausgebildet ist, wobei die Fahrdynamikregelungsvorrichtung (10) eine Pumpe (20) mit mindestens zwei Pumpenelementen (22, 23) zum Fördern einer Bremsflüssigkeit und einen Elektromotor (30) umfassend einen Rotor und einen Stator zum Antreiben der Pumpenelemente (22, 23) aufweist, und **dadurch gekennzeichnet, dass** das Verfahren folgende Schritte umfasst:
Erfassen der Position des Rotors relativ zu dem Stator; und
Einstellen einer Idealposition des Rotors relativ zu dem Stator, wobei die Summe der Drehmomente zum Bewegen der Pumpenelemente (22, 23) in der Idealposition unterhalb eines vorgegebenen Drehmomentgrenzwerts liegt, insbesondere minimal ist, wobei
die Idealposition bestimmt wird, indem ein vorgegebener Gegendruck gegen das Fördern der Bremsflüssigkeit mittels der Pumpe (20) erzeugt wird und
der benötigte Strom des Elektromotors (30) zum Fördern der Bremsflüssigkeit gegen den erzeugten Gegendruck mittels der Pumpenelemente (22, 23) erfasst wird, wobei diejenige Position des Rotors relativ zum Stator als Idealposition bestimmt wird, in der der benötigte Strom für den Elektromotor (30) unterhalb eines vorgegebenen Stromwerts liegt, insbesondere minimal ist.

2. Verfahren nach Anspruch 1, wobei
nach jeder Bewegung des Elektromotors (30) der Rotor derart eingestellt wird, dass sich dieser in Idealposition befindet.

3. Verfahren nach einem der vorhergehenden Ansprüche, wobei der Rotor dann in die Idealposition bewegt wird, wenn sich der Elektromotor (30) trotz eines Startsignals zum Starten der Bewegung des Elektromotors (30) nicht bewegt.

4. Verfahren nach einem der vorhergehenden Ansprüche, wobei der Elektromotor (30) entgegengesetzt zur Normallaufrichtung des Elektromotors (30) bewegt wird, um den Rotor in die Idealposition zu bewegen.

5. Verfahren nach einem der vorhergehenden Ansprüche, wobei in der Idealposition die Summe der Drehmomente zum Bewegen der Pumpenelemente (22, 23) im Wesentlichen Null beträgt.

6. Verfahren nach einem der vorhergehenden Ansprüche, wobei die Pumpenelemente (22, 23) abwechselnd Bremsflüssigkeit fördern.

7. Verfahren nach einem der vorhergehenden Ansprüche, wobei der Rotor dann in die Idealposition eingestellt wird, wenn erkannt wird, dass, insbesondere aufgrund des Drückens eines Bremspedals (60), ein Gegendruck gegen das Fördern der Bremsflüssigkeit vorhanden ist, der über einem vorgegebenen Druckwert liegt.

8. Verfahren nach Anspruch 7, wobei
der Gegendruck
innerhalb eines vorgegebenen Zeitraums mehrmals, insbesondere mindestens dreimal,
und/oder
für einen Zeitraum, der länger als ein vorgegebener Zeitraum ist,
oberhalb des vorgegebenen Druckwert liegen muss, damit der Rotor in der Idealposition eingestellt wird.

9. Verfahren nach einem der vorhergehenden Ansprüche, wobei
der Rotor dann in der Idealposition eingestellt wird, wenn der Füllstand eines Reservoirs (40), aus dem die Pumpe (20) die Bremsflüssigkeit fördert, einen vorgegebenen Füllstandgrenzwert, insbesondere 80% des Maximalfüllstands, vorzugsweise 90% des Maximalfüllstands, überschreitet.

10. Fahrdynamikregelungsvorrichtung (10) zum Beeinflussen des Bremsens von Rädern (50, 52) eines Kraftfahrzeugs, wobei die
Fahrdynamikregelungsvorrichtung (10) folgendes umfasst:
eine Pumpe (20) mit mindestens zwei Pumpenelementen (22, 23) zum Fördern einer Bremsflüssigkeit,
einen Elektromotor (30) umfassend einen Rotor und einen Stator zum Antreiben der Pumpenelemente (22, 23),
eine Positionserfassungsvorrichtung (55) zum Erfassen der Position des Rotors relativ zum Stator, und
eine Steuerungseinrichtung zum Einstellen der Position des Rotors relativ zum Stator in einer Idealposition, wobei in der Idealposition die Summe der Drehmomente zum Bewegen der Pumpenelemente (22, 23) unterhalb eines vorgegebenen Drehmomentgrenzwerts liegt, insbesondere minimal ist,
**dadurch gekennzeichnet, dass**
die Fahrdynamikregelungsvorrichtung (10) derart ausgebildet ist, dass die Idealposition bestimmt wird, indem ein vorgegebener Gegendruck gegen das Fördern der Bremsflüssigkeit mittels der Pumpe (20) erzeugt wird und der benötigte Strom des Elektromotors (30) zum Fördern der Bremsflüssigkeit gegen den erzeugten Gegendruck mittels der Pumpenelemente (22, 23) erfasst wird, wobei diejenige Position des Rotors relativ zum Stator als Idealposition bestimmt wird, in der der benötigte Strom für den Elektromotor (30) unterhalb eines vorgegebenen Stromwerts liegt, insbesondere minimal ist.

## Claims

1. Method for controlling a vehicle dynamics control device (10) which is designed to influence the braking of wheels (50, 52) of a motor vehicle, wherein the vehicle dynamics control device (10) has a pump (20) with at least two pump elements (22, 23) for delivering a brake fluid and an electric motor (30) comprising a rotor and a stator for driving the pump elements (22, 23), and **characterized in that** the method comprises the following steps:
detecting the position of the rotor relative to the stator; and
setting an ideal position of the rotor relative to the stator, wherein the sum of the torques for moving the pump elements (22, 23) lies below a specified torque limit value, in particular is at a minimum, in the ideal position, wherein
the ideal position is determined by way of a specified counterpressure against the delivery of the brake fluid by means of the pump (20) being generated and the required current of the electric motor (30) for delivering the brake fluid against the generated counterpressure by means of the pump elements (22, 23) being detected, wherein that position of the rotor relative to the stator in which the required current for the electric motor (30) lies below a specified current value, in particular is at a minimum, is determined as the ideal position.

2. Method according to Claim 1, wherein, after each movement of the electric motor (30), the rotor is set in such a way that it is in the ideal position.

3. Method according to either of the preceding claims, wherein the rotor is moved to the ideal position when the electric motor (30) is not moving in spite of a start signal for starting the movement of the electric motor (30) .

4. Method according to one of the preceding claims, wherein the electric motor (30) is moved opposite to the normal running direction of the electric motor (30) in order to move the rotor to the ideal position.

5. Method according to one of the preceding claims, wherein the sum of the torques for moving the pump elements (22, 23) is substantially zero in the ideal position.

6. Method according to one of the preceding claims, wherein the pump elements (22, 23) deliver brake fluid alternately.

7. Method according to one of the preceding claims, wherein the rotor is set to the ideal position when it is identified that, in particular on account of a brake pedal (60) being pressed, a counterpressure against the delivery of the brake fluid, which counterpressure lies above a specified pressure value, is present.

8. Method according to Claim 7, wherein the counterpressure has to lie above the specified pressure value several times, in particular at least three times, within a specified time period and/or for a time period which is longer than a specified time period in order for the rotor to be set in the ideal position.

9. Method according to one of the preceding claims, wherein the rotor is set in the ideal position when the filling level of a reservoir (40) from which the pump (20) delivers the brake fluid exceeds a specified filling level limit value, in particular 80% of the maximum filling level, preferably 90% of the maximum filling level.

10. Vehicle dynamics control device (10) for influencing the braking of wheels (50, 52) of a motor vehicle, wherein the vehicle dynamics control device (10) comprises the following:
a pump (20) with at least two pump elements (22, 23) for delivering a brake fluid,
an electric motor (30) comprising a rotor and a stator for driving the pump elements (22, 23),
a position detection device (55) for detecting the position of the rotor relative to the stator, and
a control device for setting the position of the rotor relative to the stator in an ideal position, wherein the sum of the torques for moving the pump elements (22, 23) lies below a specified torque limit value, in particular is at a minimum, in the ideal position,
**characterized in that**
the vehicle dynamics control device (10) is designed in such a way that the ideal position is determined by way of a specified counterpressure against the delivery of the brake fluid by means of the pump (20) being generated and the required current of the electric motor (30) for delivering the brake fluid against the generated counterpressure by means of the pump elements (22, 23) being detected, wherein that position of the rotor relative to the stator in which the required current for the electric motor (30) lies below a specified current value, in particular is at a minimum, is determined as the ideal position.

## Revendications

1. Procédé permettant de commander un dispositif électrostabilisateur programmé (10) qui est réalisé pour influencer les freins des roues (50, 52) d'un véhicule automobile, le dispositif électrostabilisateur programmé (10) présentant une pompe (20), dotée d'au moins deux éléments de pompe (22, 23) pour débiter un liquide de frein, et un moteur électrique (30) comprenant un rotor et un stator pour entraîner les éléments de pompe (22, 23), et
**caractérisé en ce que** le procédé comprend les étapes suivantes consistant à :
détecter la position du rotor par rapport au stator ; et
régler une position idéale du rotor par rapport au stator, dans lequel, dans la position idéale, la somme des couples pour la mise en mouvement des éléments de pompe (22, 23) est inférieure à une valeur limite de couple prédéfinie, en particulier est minimale, dans lequel
la position idéale est déterminée **en ce qu'**une contre-pression prédéfinie est produite au moyen de la pompe (20) contre le débit du liquide de frein, et le courant nécessaire du moteur électrique (30) pour le débit du liquide de frein contre la contre-pression produite est détecté au moyen des éléments de pompe (22, 23), dans lequel on détermine comme la position idéale la position du rotor par rapport au stator dans laquelle le courant nécessaire au moteur électrique (30) est inférieur à une valeur de courant prédéfinie, en particulier est minimal.

2. Procédé selon la revendication 1, dans lequel après chaque mouvement du moteur électrique (30), le rotor est réglé de façon à se trouver dans la position idéale.

3. Procédé selon l'une quelconque des revendications précédentes, dans lequel le rotor est mis dans la position idéale lorsque le moteur électrique (30) ne se met pas en mouvement pas malgré un signal de démarrage pour démarrer la mise en mouvement du moteur électrique (30) .

4. Procédé selon l'une quelconque des revendications précédentes, dans lequel le moteur électrique (30) est mis en mouvement à l'opposé du sens de la marche normal du moteur électrique (30) afin de mettre le rotor dans la position idéale.

5. Procédé selon l'une quelconque des revendications précédentes, dans lequel, dans la position idéale, la somme des couples pour la mise en mouvement des éléments de pompe (22, 23) est substantiellement égale à zéro.

6. Procédé selon l'une quelconque des revendications précédentes, dans lequel les éléments de pompe (22, 23) débitent du liquide de frein en alternance.

7. Procédé selon l'une quelconque des revendications précédentes, dans lequel le rotor est réglé sur la position idéale lorsqu'il est détecté, en particulier en raison de l'actionnement d'une pédale de frein (60), qu'il existe une contre-pression contre le débit du liquide de frein qui est supérieure à une valeur de pression prédéfinie.

8. Procédé selon la revendication 7, dans lequel, à l'intérieur d'une période de temps prédéfinie, la contre-pression doit être supérieure à la valeur de pression prédéfinie, à plusieurs reprises, en particulier au moins trois fois, et/ou pendant une période de temps qui est plus longue qu'une période de temps prédéfinie, pour que le rotor soit réglé sur la position idéale.

9. Procédé selon l'une quelconque des revendications précédentes, dans lequel le rotor est réglé sur la position idéale lorsque le niveau de remplissage d'un réservoir (40) d'où la pompe (20) débite le liquide de frein, dépasse une valeur limite de niveau de remplissage prédéfinie, en particulier 80 % du niveau de remplissage maximal, de préférence 90 % du niveau de remplissage maximal.

10. Dispositif électrostabilisateur programmé (10) permettant d'influencer le freinage des roues (50, 52) d'un véhicule automobile, le dispositif électrostabilisateur programmé (10) comprenant :
une pompe (20) pourvue d'au moins deux éléments de pompe (22, 23) pour débiter un liquide de frein,
un moteur électrique (30) comprenant un rotor et un stator pour entraîner les éléments de pompe (22, 23),
un dispositif de détection de position (55) pour détecter la position du rotor par rapport au stator, et
un moyen de commande pour régler la position du rotor par rapport au stator dans une position idéale, dans lequel, dans la position idéale, la somme des couples pour la mise en mouvement des éléments de pompe (22, 23) est inférieure à une valeur limite de couple prédéfinie, en particulier est minimale,
**caractérisé en ce que** le dispositif électrostabilisateur programmé (10) est réalisé de telle sorte que la position idéale est déterminée **en ce qu'**une contre-pression prédéfinie est produite au moyen de la pompe (20) contre le début du liquide de frein, et le courant nécessaire du moteur électrique (30) pour le débit du liquide de frein contre la contre-pression produite est détecté au moyen des éléments de pompe (22, 23), dans laquelle on détermine comme la position idéale la position du rotor par rapport au stator dans laquelle le courant nécessaire au moteur électrique (30) est inférieur à une valeur de courant prédéfinie, en particulier est minimal.
